# EUROPÄISCHE PATENTSCHRIFT

(11) **EP 2 469 137 B1**
(45) Veröffentlichungstag und Bekanntmachung des Hinweises auf die Patenterteilung: **14.05.2014**
(21) Anmeldenummer: 11194109.2
(22) Anmeldetag: 16.12.2011
(51) Int. Cl.: F16K 31/06

(54) **Druckminderer**
Pressure reducer
Réducteur de pression

(30) Priorität: 22.12.2010 DE 102010055747
(43) Veröffentlichungstag der Anmeldung: 27.06.2012
(73) Patentinhaber: Magna Steyr Fahrzeugtechnik AG & Co KG, 8041 Graz (AT)
(72) Erfinder: Pucher, Peter, 8111 Judendorf Straßengel (AT)
(74) Vertreter: Rausch, Gabriele

(56) Entgegenhaltungen:
- EP-A1- 0 461 081
- DE-A1-102008 020 019

## Beschreibung

### TECHNISCHES GEBIET

Die Erfindung betrifft einen Druckminderer, umfassend einen Hochdruckeingang, einen Niederdruckausgang und ein Ventil mit einem Ventilsitz und einem damit zusammenwirkenden, verschiebbaren Ventilkolben. Der Ventilkolben gibt bei Verschiebung vom Ventilsitz weg einen Weg zwischen dem Hochdruckeingang und dem Niederdruckausgang frei. Zudem wirkt auf den Ventilkolben im Betrieb des Druckminderers eine durch den Niederdruck verursachte Schließkraft in Richtung Ventilsitz. Dazu umfasst der Ventilkolben eine quer zur Verschieberichtung ausgerichtete und dem Niederdruckausgang zugewandte Wirkfläche, derart, dass auf ihn die genannte Schließkraft wirkt. Schließlich umfasst der Druckminderer eine Feder, welche zur Ausübung einer Betätigungskraft auf den Ventilkolben, welche vom Ventilsitz weg wirkt, ausgebildet ist, sowie eine Magnetspule, welche zur Ausübung einer der Schliesskraft beziehungsweise der Betätigungskraft überlagerten und auf den Ventilkolben wirkenden Magnetkraft vorbereitet ist.

### STAND DER TECHNIK

Druckminderer werden ganz allgemein dazu verwendet, den Druck eines Fluids (flüssig oder gasförmig) zu reduzieren. Zumeist werden sie im Verlauf einer Rohrleitung eingebaut, sodass am Hochdruckeingang noch ein höherer, am Niederdruckausgang aber ein niedrigerer Druck herrscht. Beispielsweise kann der Druck in einer Wasserleitung oder auch der Druck aus einer Pressluft- oder Gasflasche mit einem Druckminderer oder auch Druckregler der eingangs genannten Art auf ein gewünschtes Maß reduziert werden.

Zudem sind aus dem Stand der Technik auch Druckminderer bekannt, die elektromagnetisch betätigt werden können. Beispielsweise offenbart die EP 1 209 336 A2 dazu einen Druckminderer für ein Gas-Einspritzsystem einer mit Methan betriebenen Verbrennungskraftmaschine. Dabei wird ein Ventilkolben, der durch eine Feder gegen einen Ventilsitz gepresst wird, elektromagnetisch angehoben, um das Ventil zu öffnen. Im Ruhezustand ist das Ventil wegen der Feder also geschlossen. Durch Pulsweitenmodulation, d.h. Variation des Verhältnisses zwischen der Zeit, in der das Ventil offen ist, und der Zeit, in der das Ventil geschlossen ist, kann der Druck am Niederdruckausgang eingestellt werden. Streng genommen handelt es sich bei dieser Vorrichtung aber nicht um einen Druckminderer der eingangs genannten Art, sondern - da das Ventil im Ruhezustand wegen der Feder ja geschlossen ist - um ein herkömmliches Magnetventil, das als Druckminderer betrieben wird.

Die US 6,202,697 B 1 offenbart weiterhin ein Ventil zur Druckreduktion, welches einen Hochdruckeingang, einen Niederdruckeingang sowie einen Lastausgang aufweist. Ein elektromagnetisch betätigter Ventilkolben verbindet dabei den Lastausgang mit dem Hochdruckeingang oder dem Niederdruckeingang. Auch bei dieser Apparatur handelt es sich wegen der vielen Anschlüsse nicht um einen Druckminderer im klassischen Sinn mit einem Hochdruckeingang und einem Niederdruckausgang.

Aus der DE 10 2008 020 019 A1 ist ein Elektromagnetventil bekannt, mit einem Ventilgehäuse, das einen Ventilschließkörper und eine den Ventilschließkörper beherrschende Magnetbetätigungseinheit aufweist, wobei der Ventilschließkörper mit einem Ventilsitz in Wirkverbindung steht und den Strömungsquerschnitt zwischen einem Hochdruckanschluss am Ventilgehäuse und einem Niederdruckanschluss am Ventilgehäuse in Verlängerung des Ventilsitzes beherrscht, wobei im Bereich des Ventilsitzes und/oder Niederdruckanschlusses eine am Ventilgehäuse abgestützte Druckfeder angeordnet ist, die mit ihrem anderen Ende den Ventilschließkörper in Öffnungsrichtung gegen die Schließkraft der Magnetbetätigungseinheit belastet, und mit einem Dichtelement das zwischen dem Ventilgehäuse und dem Ventilschließkörper an dessen dem Ventilsitz abgewandten Bereich angeordnet ist.

Die DE 37 41 526 A1 offenbart ein Sitzventil, insbesondere in Verwendung als Überströmventil zur Steuerung des Förderbeginns und -endes von Kraftstoffeinspritzpumpen, mit einem in einem Ventilgehäuse enthaltenden Ventilraum, mit einer Ventilöffnung, die den Ventilraum in einen Hochdruckraum und einen Entlastungsraum unterteilt, mit einem die Ventilöffnung umgebenden Ventilsitz, mit einem mit dem Ventilsitz zum Schließen und Freigeben der Ventilöffnung zusammenwirkenden Ventilglied, das im Ventilschließzustand mit einer Schließfläche auf dem Ventilsitz dicht aufliegt und dort vom Hochdruck in Ventilöffnungsrichtung beaufschlagt wird und eine vom Hochdruck in Ventilschließrichtung belastete Steuerfläche trägt, und mit einem das Ventilglied betätigenden elektrischen Stellglied, insbesondere Elektromagneten.

Aus der EP 0 461 081 A1 ist ein gattungsgemässer Druckminderer bekannt mit einem Zuleitungsrohr und einem Abflussrohr, zwischen welchen ein Schieber mit einem Sitz angeordnet ist, wobei bei Verschiebung des Schiebers vom Sitz weg ein Weg zwischen dem Zuleitungsrohr und dem Abflussrohr freigegeben wird. Weiters wirken eine Feder und ein Elektromagnet auf den Schieber.

### OFFENBARUNG DER ERFINDUNG

Aufgabe der Erfindung ist es nun, einen verbesserten Druckminderer anzugeben, insbesondere einen, bei dem Druck am Niederdruckausgang sehr rasch und auch ferngesteuert variiert werden kann, bei dem die Grundfunktion aber auch ohne äußere Eingriffe stets erhalten bleibt.

Die Aufgabe der Erfindung wird durch einen Druckminderer der eingangs genannten Art dadurch gelöst, dass der Ventilkolben so ausgebildet ist, dass dem Hochdruckeingang im geschlossenen Zustand des Ventils lediglich eine Radialfläche des Ventilkolbens zugewandt ist.

Beim erfindungsgemässen Druckminderer kann der Druck am Niederdruckausgang durch Anlegen einer Spannung an die Magnetspule sehr rasch geändert werden. Durch Erfassung des Druckes am Ausgang des Druckreglers und entsprechende Regelung der Magnetkraft können so auch unterschiedliche Störeinflüsse (Reibungskräfte, Temperatur, Durchfluss...) ausgeglichen werden. Mit entsprechend langen Kabeln kann der Druck auch ferngesteuert variiert werden. Denkbar ist auch, dass der Druckminderer mit einer abgesetzten Energiequelle und einem Funkmodul ausgestaltet ist und solcherart ferngesteuert werden kann. Ohne äußere Eingriffe, beispielsweise wenn die Fernsteuerung ausfällt, bleibt dennoch eine Grundfunktion erhalten. Der Druckminderer regelt den Druck am Niederdruckausgang dann rein mechanisch auf ein zuvor eingestelltes Niveau. Der erfindungsgemäße Druckminderer ist daher extrem ausfallsicher. Der Ventilkolben ist erfindungsgemäss so ausgebildet, dass dem Hochdruckeingang im geschlossenen Zustand des Ventils lediglich eine Radialfläche des Ventilkolbens zugewandt ist. Auf diese Weise kann der auf der Hochdruckseite herrschende Druck keine Druckkraft auf den Ventilkolben ausüben, welche in seine Verschieberichtung wirkt. Der auf der Hochdruckseite wirkende Druck hat daher praktisch keinen Einfluss auf das Druckniveau auf der Niederdruckseite.

Vorteilhafte Ausgestaltungen und Weiterbildungen der Erfindung ergeben sich nun aus den Unteransprüchen, sowie aus der Beschreibung in Zusammenschau mit den Figuren.

Günstig ist es, wenn die Magnetspule gegenüber einem auf den Ventilkolben wirkenden oder mit diesem verbundenen Magnetanker so angeordnet ist, dass die Magnetkraft in Öffnungsrichtung des Ventils wirkt. Insbesondere ist der Magnetanker dazu in Richtung des Niederdruckausgangs verschoben angeordnet. Bei dieser Ausführungsform kann der Druck auf der Niederdruckseite durch Anlegen einer Spannung an die Magnetspule erhöht werden. Fällt diese Steuermöglichkeit weg, so wird der Druck autonom auf ein niedrigeres und damit sichereres Druckniveau geregelt.

Vorteilhaft ist es, wenn der Ventilkolben selbst als Magnetanker ausgebildet ist. Auf diese Weise kann ein gesondertes Bauteil, welches als Magnetanker fungiert, entfallen. Der erfindungsgemäße Druckminderer weist daher nur wenige Bauteile auf und ist somit vergleichsweise leicht zusammenzubauen. Darüber hinaus kann der Druckminderer auch sehr kompakt aufgebaut werden.

Vorteilhaft ist es auch, wenn die auf den Ventilkolben wirkende und durch die Magnetspule verursachte Kraft maximal halb so groß ist wie die durch die Feder verursachte Betätigungskraft. Auf diese Weise kann verhindert werden, dass zur elektromagnetischen Betätigung des Ventilkolbens allzu hohe elektrische Ströme vonnöten sind. Zudem sind die Druckunterschiede zwischen elektromagnetisch gesteuertem Zustand und ungesteuertem Zustand nicht so groß, sodass sich bei Ausfall der elektromagnetischen Steuerung keine allzu hohen und unliebsamen Druckwellen in dem Rohrleitungssystem, in das der erfindungsgemäße Druckminderer eingebaut ist, ausbilden können.

Vorteilhaft ist es zudem, wenn im Ventilkolben eine Durchgangsöffnung vorgesehen ist, welche den Hochdruckeingang und den Niederdruckausgang im geöffneten Zustand des Ventils verbindet. Auf diese Weise kann der Druckminderer besonders kompakt aufgebaut werden, da in einem Ventilkörper selbst keine durchgehende Öffnung zwischen Hochdruckeingang und dem Niederdruckausgang vorgesehen werden muss. Der Ventilkolben erfüllt somit eine Doppelfunktion.

Besonders vorteilhaft ist es, wenn die Berührungsfläche zwischen Ventilsitz und Ventilkolben als Metall-Kunststoff-Kombination ausgebildet ist. Bei dieser Variante der Erfindung kann eine besonders gute Dichtwirkung des Ventils erzielt werden. Beispielsweise kann die Dichtfläche auf dem Ventilkolben aus Kunststoff gefertigt sein, wohingegen der Ventilsitz zum Beispiel aus Messing oder rostfreiem Stahl besteht. Aber auch eine umgekehrte Konfiguration ist möglich. In diesem Fall ist der Ventilkolben im Bereich des Ventilsitzes aus Metall gefertigt, wohingegen der Ventilsitz aus Kunststoff besteht.

Günstig ist es, wenn ein Öffnungsquerschnitt des Ventils proportional zu einer Verschiebung des Ventilkolbens vom Ventilsitz weg vergrößert wird. Auf diese Weise kann die Steuerkennlinie des Druckminderers mehr oder minder linear gestaltet werden. Die Druckregelung erfolgt daher über den gesamten Bereich mit derselben Präzision.

Günstig ist es zudem, wenn der Ventilkolben in einem den Ventilsitz umfassenden Ventilkörper geführt ist und zwischen dem Hochdruckeingang und dem Niederdruckausgang und zwischen dem Hochdruckeingang und einer Umgebung des Druckminderers jeweils ein Dichtungsring (z.B. O-Ringe) zwischen Ventilkolben und Ventilkörper angeordnet ist. Auf diese Weise können Leckagen zwischen dem Hochdruckeingang und dem Niederdruckausgang beziehungsweise zwischen dem Hochdruckeingang und einer Umgebung des Druckminderers vermieden werden.

Vorteilhaft ist es, wenn die Dichtungsringe den Ventilkolben/Ventilkörper an ein und demselben Bauteil des Ventilkolbens/Ventilkörpers berühren. Auf diese Weise können Dichtheitsprobleme, welche durch kumulierte Bauteiltoleranzen, die beim Zusammenbau mehrerer unterschiedlicher Bauteile entstehen, vermieden werden.

Vorteilhaft ist es schließlich, wenn der maximale Öffnungsquerschnitt des Ventils kleiner ist als die übrigen Durchflußquerschnitte zwischen dem Hochdruckeingang und dem Niederdruckausgang. Besonders vorteilhaft ist es in diesem Zusammenhang, wenn der maximale Öffnungsquerschnitt des Ventils maximal halb so groß ist wie die übrigen Durchflußquerschnitte zwischen dem Hochdruckeingang und dem Niederdruckausgang. Auf diese Weise wird sichergestellt, dass die Druckregelung allein durch Verschiebung des Ventilkolbens erfolgt und eine (zusätzliche) Engstelle diese Druckregelung nicht stört oder gar unmöglich macht.

### KURZE BESCHREIBUNG DER FIGUREN

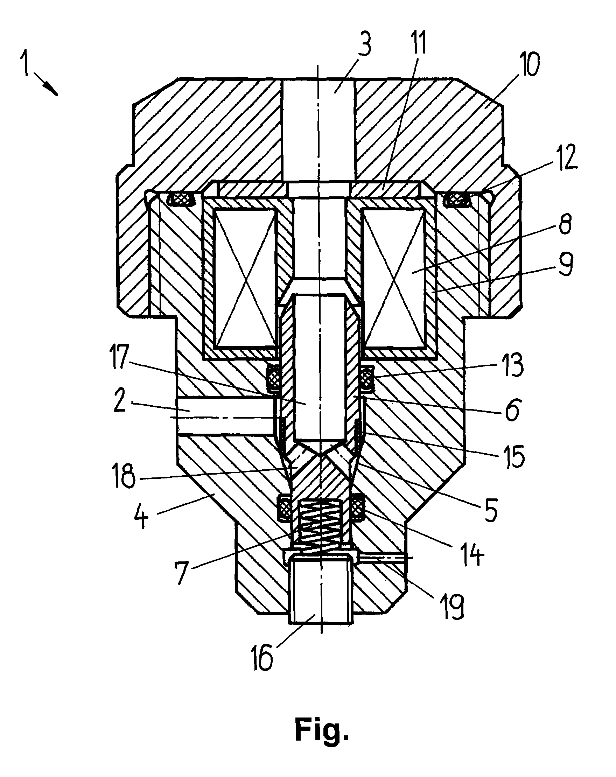

Die vorliegende Erfindung wird nachfolgend anhand des in der schematischen Figur der Zeichnung angegebenen Ausführungsbeispiels näher erläutert. Diese zeigt einen Querschnitt durch einen erfindungsgemäßen Druckminderer.

### DETAILIERTE BESCHREIBUNG DER ERFINDUNG

Eingangs wird festgehalten, dass in den Figuren gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes bezeichnet sind.

Weiterhin wird festgehalten, dass sich Lageangeben wie "oben", "unten", "seitlich", "horizontal", "vertikal" und dergleichen auf die dargestellte Lage des Druckminderers desselben beziehen. Bei Änderung der Lage des Druckminderers sind die Lageangaben gedanklich entsprechend anzupassen.

Die Figur zeigt einen Querschnitt durch einen erfindungsgemäßen Druckminderer 1 mit einem Hochdruckeingang 2 und einem Niederdruckausgang 3. Der Druckminderer 1 umfasst einen Ventilkörper 4 mit einem Ventilsitz 5 sowie einen Ventilkolben 6, welcher in dem Ventilkörper 4 in einer Verschieberichtung (hier vertikal) verschiebbar gelagert ist. Weiterhin umfasst der Druckminderer 1 eine Feder 7, welche den Ventilkolben 6 vom Ventilsitz 5 wegdrückt. Der Druckminderer 1 umfasst darüber hinaus eine Magnetspule 8, welche in einem Spulengehäuse 9 angeordnet ist. Das Spulengehäuse 9 ist in den Ventilkörper 4 gesteckt und wird mit Hilfe einer Überwurfmutter 10, welche über eine Scheibe 11 auf das Spulengehäuse 9 drückt, im Ventilkörper 4 gehalten.

Zur Abdichtung zwischen Ventilkörper 4 und Überwurfmutter 10 ist ein Dichtring 12 vorgesehen. Weiterhin ist zwischen dem Hochdruckeingang 2 und dem Niederdruckausgang 3 ein Dichtungsring 13 zwischen dem Ventilkolben 6 und dem Ventilkörper 4 angeordnet. Zwischen dem Hochdruckeingang 2 und einer Umgebung des Druckminderers 1 ist ein weiterer Dichtungsring 14 zwischen dem Ventilkolben 6 und dem Ventilkörper 4 angeordnet. Die Dichtungsringe 12, 13 und 14 können beispielsweise in Form von O-Ringen ausgeführt sein. Vorzugsweise berühren die Dichtungsringe 13 und 14 den Ventilkolben 6 und/oder den Ventilkörper 4 so wie in der Figur dargestellt an ein und demselben Bauteil des Ventilkolbens 6 beziehungsweise an ein und demselben Bauteil des Ventilkörpers 4, sodass Einbautoleranzen verschiedener Bauteile keinen Einfluss auf die Dichtwirkung der Dichtungsringe 13 und 14 haben können.

Ferner ist auf dem Ventilkolben 6 im Bereich des Ventilsitzes 5 eine Kunststoffhülse 15 angebracht, welche für eine gute Dichtung zwischen dem Ventilkolben 6 und dem beispielsweise aus Messing, rostfreiem Stahl oder einem anderen Metall gefertigten Ventilkörper 4 sorgt. Denkbar ist natürlich auch, dass der Ventilsitz 5 aus einem Kunststoff besteht. In diesem Fall kann die Kunststoffhülse 15 am Ventilkolben 6 entfallen.

Weiterhin umfasst der Druckminderer 1 eine Einstellschraube 16, welche auf die Feder 7 wirkt. Zudem umfasst der Ventilkolben 6 eine Durchgangsöffnung 17, welche den Hochdruckeingang 2 und den Niederdruckausgang 3 im geöffneten Zustand des Ventils verbindet. Über Öffnungen 18 ist die Durchgangsöffnung 17 im Bereich des Ventilsitzes 5 mit dem Umfang des Ventilkolbens 6 verbunden. Schließlich umfasst der Druckminderer 1 eine Druckausgleichsöffnung 19, welche den Bereich unter dem Ventilkolben 6 mit der Umgebung des Druckminderers 1 verbindet.

Die Funktion des in der Figur dargestellten, erfindungsgemäßen Druckminderers 1 ist nun wie folgt:
Die Feder 7 übt auf den Ventilkolben 6 eine Betätigungskraft aus, welche diesen vom Ventilsitz 5 wegdrückt. Das Ventil wird somit geöffnet, und ein Fluid kann vom Hochdruckeingang 2 zum Niederdruckausgang 3 fließen, und zwar über die Öffnungen 18 und die Durchgangsöffnung 17. Steigt der Druck am Niederdruckausgang 3 an, so erhöht sich die Kraft auf den Ventilkolben 6 und drückt diesen gegen die Feder- bzw. Betätigungskraft gegen den Ventilsitz 5. Somit stellt sich auf der Niederdruckseite ein bestimmter Druck ein, der so groß ist, dass die auf den Ventilkolben 6 durch den Niederdruck verursachte und in Richtung des Ventilsitzes 5 wirkende Schließkraft gleich groß ist wie die Betätigungskraft der Feder 7. Ist das Ventil einmal geschlossen, so kann die Schließkraft die Betätigungskraft bei weiter steigendem Druck auf der Niederdruckseite auch übersteigen. Um den Druck am Niederdruckausgang 3 einzustellen, kann die Feder 7 mit Hilfe der Einstellschraube 16 mehr oder weniger stark vorgespannt werden.

Der Öffnungsquerschnitt des Ventils ist bei der dargestellten Ausführungsform des Druckminderers 1 proportional zu einer Verschiebung des Ventilkolbens 6 vom Ventilsitz 5 weg, sodass die Steuerkennlinie des Ventils mehr oder minder linear ist. Vorzugsweise ist der maximale Öffnungsquerschnitt des Ventils darüber hinaus kleiner als, noch weiter bevorzugt maximal halb so groß wie die übrigen Durchflußquerschnitte zwischen Hochdruckeingang und Niederdruckausgang. Auf diese Weise wird sichergestellt, dass die Druckregelung allein durch Verschiebung des Ventilkolbens 6 erfolgt und eine (zusätzliche) Engstelle diese Druckregelung nicht konterkariert.

Der Druck auf der Hochdruckseite hat praktisch keinen Einfluss auf die Druckregelung, da der Ventilkolben 6 so ausgebildet ist, dass dem Hochdruckeingang 1 lediglich eine Radialfläche des Ventilkolbens 6 zugewandt ist. Der Druck am Hochdruckeingang 1 verursacht daher keine Kraft in der Verschieberichtung des Ventilkolbens 6.

Wird die Magnetspule 8 nun von einem elektrischen Strom durchflossen, so kann der Schließkraft beziehungsweise der Betätigungskraft eine auf den Ventilkolben 6 in dessen Verschieberichtung wirkende Magnetkraft überlagert werden.

In der dargestellten Ausführungsform ist der Ventilkolben 6 selbst als Magnetanker ausgebildet. Die Magnetspule 8 ist gegenüber dem hier als Anker ausgebildeten Ventilkolben 6 so angeordnet, dass die Magnetkraft in Öffnungsrichtung wirkt. Konkret ist die Magnetspule 8 in diesem Beispiel in Richtung des Niederdruckausgangs 3 verschoben angeordnet. Die Magnetkraft wirkt somit in die gleiche Richtung-wie die durch die Feder 7 verursachte Betätigungskraft und damit gegen die durch den Niederdruck verursachte Schließkraft. Somit kann der Druck am Niederdruckausgang 3 durch Ansteuerung der Magnetspule 8 auf ein höheres Niveau eingestellt werden als das durch die Feder 7 beziehungsweise die Einstellschraube 16 eingestellte Niveau. Vorzugsweise ist die maximale auf den Ventilkolben 6 wirkende und durch die Magnetspule 8 verursachte Magnetkraft maximal halb so groß ist wie die durch die Feder 7 verursachte Betätigungskraft. Bei dieser Variante der Erfindung führt also ein Ausfall der Steuermöglichkeit über die Magnetspule 8 dazu, dass der Druck am Niederdruckausgang 3 auf das durch die Feder 7 eingestellte niedrigere und damit sicherere Druckniveau geregelt wird.

In einer realisierten Ausführungsform des erfindungsgemäßen Druckminderers 1 wurde die Kolben-Wirkfläche (d.h. die Fläche des Ventilkolbens 6, auf welche der Niederdruck wirkt) und somit die Schließkraft, beziehungsweise die Federkraft so (klein) gewählt, dass eine relativ kleine Magnetkraft von ∼10N ausreicht um eine Druckerhöhung von ∼4bar zu erreichen. Auf diese Weise konnte eine besonders kompakte Bauweise des Druckminderers 1 bei nur geringer Leistungsaufnahme der Magnetspule 8 erzielt werden. Selbstverständlich richtet sich die Abstimmung der einzelnen Parameter des Druckminderers 1 nach dessen Einsatzzweck. Der Fachmann wird hier ohne erfinderisches Zutun eine passende Parameterkombination für die ihm gestellte Aufgabe auffinden.

In der Figur ist zwar eine vorteilhafte Ausgestaltung des erfindungsgemäßen Druckminderers 1 dargestellt, aber nicht die einzig mögliche. Denkbar wäre auch dass der Ventilkolben 6 gegenüber der Magnetspule 8 in Richtung des Niederdruckausgangs verschoben angeordnet ist. In diesem Fall würde ein durch die Magnetspule 8 fließender Strom eine Verringerung des Drucks am Niederdruckausgang 3 bewirken. Desgleichen ist vorstellbar, dass nicht der Ventilkolben 6 selbst als Magnetanker ausgebildet ist sondern ein gesonderter, auf den Ventilkolben 6 wirkender oder mit diesem verbundener Magnetanker vorgesehen ist. In diesem Fall ist die örtliche Anordnung von Magnetspule 8 und Magnetanker relevant. Somit kann prinzipiell auch dann eine Druckerhöhung bewirkt werden, wenn die Magnetspule 8 in der Figur unterhalb des Ventilkolbens 6, dafür aber der Magnetanker oberhalb derselben angeordnet ist.

Schließlich wird die Funktion der Druckausgleichsöffnung 19 erklärt. Dies sorgt dafür, dass sich im Raum unter dem Ventilkolben 6 kein Überdruck aufbauen kann, der - da ja die durch ihn verursachte und auf den Ventilkolben 6 wirkende Kraft gleichgerichtet wie die durch die Feder 7 verursachte Betätigungskraft ist - zu einer schleichenden, unerwünschten und unter Umständen auch unbemerkten Druckerhöhung am Niederdruckausgang 3 führen würde.

Abschließend wird darauf hingewiesen, dass die in der Figur gezeigten Bauteile teilweise vereinfacht dargestellt sind. In der Realität kann ein erfindungsgemäßer Druckminderer 1 auch von der Darstellung abweichen, insbesondere kann dieser komplexere und/oder zusätzliche hier nicht dargestellte Bauteile umfassen. Schließlich wird angemerkt, dass die Darstellungen nicht notwendigerweise maßstäblich sind und Proportionen von realen Bauteilen auch von den Proportionen der dargestellten Bauteile abweichen können.

## Patentansprüche

1. Druckminderer (1), umfassend
- einen Hochdruckeingang (2),
- einen Niederdruckausgang (3),
- ein Ventil mit einem Ventilsitz (5) und einem damit zusammenwirkenden, verschiebbaren Ventilkolben (6), welcher bei Verschiebung vom Ventilsitz (5) weg einen Weg zwischen dem Hochdruckeingang (2) und dem Niederdruckausgang (3) freigibt und auf welchen im Betrieb des Druckminderers (1) eine durch den Niederdruck verursachte Schließkraft in Richtung Ventilsitz (5) wirkt.
- eine Feder (7), welche zur Ausübung einer Betätigungskraft auf den Ventilkolben (6), welche vom Ventilsitz (5) weg wirkt, ausgebildet ist,
- eine Magnetspule (8), welche zur Ausübung einer der Schließkraft beziehungsweise der Betätigungskraft überlagerten und auf den Ventilkolben (6) wirkenden Magnetkraft vorbereitet ist,
**dadurch gekennzeichnet, dass** der Ventilkolben (6) so ausgebildet ist, dass dem Hochdruckeingang (2) im geschlossenen Zustand des Ventils lediglich eine Radialfläche des Ventilkolbens (6) zugewandt ist.

2. Druckminderer (1) nach Anspruch 1, **dadurch gekennzeichnet, dass** die Magnetspule (8) gegenüber einem auf den Ventilkolben (6) wirkenden oder mit diesem verbundenen Magnetanker so angeordnet ist, dass die Magnetkraft in eine Öffnungsrichtung des Ventils wirkt.

3. Druckminderer (1) nach Anspruch 1 oder 2, **dadurch gekennzeichnet, dass** der Ventilkolben (6) selbst als Magnetanker ausgebildet ist.

4. Druckminderer (1) nach einem der Ansprüche 1 bis 3, **dadurch gekennzeichnet, dass** die auf den Ventilkolben (6) wirkende und durch die Magnetspule (8) verursachte Magnetkraft maximal halb so groß ist wie die durch die Feder (7) verursachte Betätigungskraft.

5. Druckminderer (1) nach einem der Ansprüche 1 bis 4, **dadurch gekennzeichnet, dass** im Ventilkolben (6) eine Durchgangsöffnung (17) vorgesehen ist, welche den Hochdruckeingang (2) und den Niederdruckausgang (3) im geöffneten Zustand des Ventils verbindet.

6. Druckminderer (1) nach einem der Ansprüche 1 bis 5, **dadurch gekennzeichnet, dass** die Berührungsfläche zwischen Ventilsitz (5) und Ventilkolben (6) als Metall-Kunststoff-Kombination ausgebildet ist.

7. Druckminderer (1) nach einem der Ansprüche 1 bis 6, **dadurch gekennzeichnet, dass** ein Öffnungsquerschnitt des Ventils proportional zu einer Verschiebung des Ventilkolbens (6) vom Ventilsitz (5) weg vergrößert wird.

8. Druckminderer (1) nach einem der Ansprüche 1 bis 7, **dadurch gekennzeichnet, dass** der Ventilkolben (6) in einem den Ventilsitz (5) umfassenden Ventilkörper (4) geführt ist und zwischen dem Hochdruckeingang (2) und dem Niederdruckausgang (3) und zwischen dem Hochdruckeingang (2) und einer Umgebung des Druckminderers (1) jeweils ein Dichtungsring (13, 14) zwischen dem Ventilkolben (6) und dem Ventilkörper (4) angeordnet ist.

9. Druckminderer (1) nach Anspruch 8, **dadurch gekennzeichnet, dass** die Dichtungsringe (13, 14) den Ventilkolben (6) an ein und demselben Bauteil des Ventilkolbens (6) berühren.

10. Druckminderer (1) nach Anspruch 8 oder 9, **dadurch gekennzeichnet, dass** die Dichtungsringe (13, 14) den Ventilkörper (4) an ein und demselben Bauteil des Ventilkörpers (4) berühren.

11. Druckminderer (1) nach einem der Ansprüche 1 bis 10, **dadurch gekennzeichnet, dass** der maximale Öffnungsquerschnitt des Ventils kleiner ist als die übrigen Durchflußquerschnitte zwischen dem Hochdruckeingang (2) und dem Niederdruckausgang (3).

12. Druckminderer (1) nach Anspruch 11, **dadurch gekennzeichnet, dass** der maximale Öffnungsquerschnitt des Ventils maximal halb so groß ist wie die übrigen Durchflußquerschnitte zwischen dem Hochdruckeingang (2) und dem Niederdruckausgang (3).

## Claims

1. Pressure reducer (1), comprising
- a high pressure inlet (2),
- a low pressure outlet (3),
- a valve with a valve seat (5) and a movable valve piston (6) that interacts with it, which, when displaced away from the valve seat (5), opens a path between the high pressure inlet (2) and the low pressure outlet (3) and on which during operation of the pressure reducer (1) a closing force caused by the low pressure acts towards the valve seat (5).
- a spring (7), which is configured to exert an actuating force on the valve piston (6), which acts away from the valve seat (5),
- a solenoid coil (8), which is configured to exert a magnetic force superimposed on the closing force or the actuating force and acting on the valve piston (6),
**characterized in that** the valve piston (6) is configured so that the high pressure inlet (2) only faces one radial surface of the valve piston (6) with the valve in the closed state.

2. Pressure reducer (1) according to Claim 1, **characterized in that** the solenoid coil (8) is arranged relative to a magnetic armature acting on the valve piston (6) or connected to it, so that the magnetic force acts in a valve opening direction.

3. Pressure reducer (1) according to Claim 1 or 2, **characterized in that** the valve piston (6) itself is in the form of a magnetic armature.

4. Pressure reducer (1) according to one of Claims 1 to 3, **characterized in that** the magnetic force acting on the valve piston (6) and caused by the solenoid coil (8) is no more than half the magnitude of the actuating force caused by the spring (7).

5. Pressure reducer (1) according to one of Claims 1 to 4, **characterized in that** a through opening (17) is provided in the valve piston (6) which connects the high pressure inlet (2) and the low pressure outlet (3) with the valve in the open state.

6. Pressure reducer (1) according to one of Claims 1 to 5, **characterized in that** the contact surface between the valve seat (5) and the valve piston (6) is in the form of a combination of metal and plastic.

7. Pressure reducer (1) according to one of Claims 1 to 6, **characterized in that** an opening cross-section of the valve increases in proportion to a displacement of the valve piston (6) away from the valve seat (5).

8. Pressure reducer (1) according to one of Claims 1 to 7, **characterized in that** the valve piston (6) is guided in a valve body (4) containing the valve seat (5) and a sealing ring (13, 14) is arranged between the valve piston (6) and the valve body (4) between the high pressure inlet (2) and the low pressure outlet (3) and between the high pressure inlet (2) and the surroundings of the pressure reducer (1) respectively.

9. Pressure reducer (1) according to Claim 8, **characterized in that** the sealing rings (13, 14) contact the valve piston (6) on one and the same component of the valve piston (6).

10. Pressure reducer (1) according to Claim 8 or 9, **characterized in that** the sealing rings (13, 14) contact the valve body (4) on one and the same component of the valve body (4).

11. Pressure reducer (1) according to one of Claims 1 to 10, **characterized in that** the maximum opening cross-section of the valve is smaller than the remaining flow cross-sections between the high pressure inlet (2) and the low pressure outlet (3).

12. Pressure reducer (1) according to Claim 11, **characterized in that** the maximum opening cross-section of the valve is no greater than half the remaining flow cross-sections between the high pressure inlet (2) and the low pressure outlet (3).

## Revendications

1. Réducteur de pression (1), comprenant
- une entrée haute pression (2),
- une sortie basse pression (3),
- une soupape comprenant un siège de soupape (5) et un piston de soupape déplaçable (6), coopérant avec celui-ci, qui, lorsqu'il s'écarte du siège de soupape (5), libère une voie entre l'entrée haute pression (2) et la sortie basse pression (3) et sur lequel, pendant le fonctionnement du réducteur de pression (1), une force de fermeture provoquée par la basse pression agit dans la direction du siège de soupape (5),
- un ressort (7), réalisé pour exercer une force d'actionnement sur le piston de soupape (6) qui agit de manière à s'écarter du siège de soupape (5),
- une bobine magnétique (8) qui est prévue pour exercer une force magnétique superposée à la force de fermeture ou à la force d'actionnement et agissant sur le piston de soupape (6),
**caractérisé en ce que** le piston de soupape (6) est réalisé de telle sorte que seulement une surface radiale du piston de soupape (6) soit tournée vers l'entrée haute pression (2) dans l'état fermé de la soupape.

2. Réducteur de pression (1) selon la revendication 1, **caractérisé en ce que** la bobine magnétique (8) est disposée par rapport à une armature d'aimant agissant sur le piston de soupape (6) ou connectée à celui-ci de telle sorte que la force magnétique agisse dans une direction d'ouverture de la soupape.

3. Réducteur de pression (1) selon la revendication 1 ou 2, **caractérisé en ce que** le piston de soupape (6) est réalisé lui-même en tant qu'armature d'aimant.

4. Réducteur de pression (1) selon l'une quelconque des revendications 1 à 3, **caractérisé en ce que** la force magnétique agissant sur le piston de soupape (6) et provoquée par la bobine magnétique (8) est au maximum deux fois plus petite que la force d'actionnement provoquée par le ressort (7).

5. Réducteur de pression (1) selon l'une quelconque des revendications 1 à 4, **caractérisé en ce qu'**une ouverture de passage (17) est prévue dans le piston de soupape (6), laquelle relie l'entrée haute pression (2) et la sortie basse pression (3) dans l'état ouvert de la soupape.

6. Réducteur de pression (1) selon l'une quelconque des revendications 1 à 5, **caractérisé en ce que** la surface de contact entre le siège de soupape (5) et le piston de soupape (6) est réalisée sous forme de combinaison métal-plastique.

7. Réducteur de pression (1) selon l'une quelconque des revendications 1 à 6, **caractérisé en ce qu'**une section transversale d'ouverture de la soupape augmente proportionnellement à un déplacement du piston de soupape (6) à l'écart du siège de soupape (5).

8. Réducteur de pression (1) selon l'une quelconque des revendications 1 à 7, **caractérisé en ce que** le piston de soupape (6) est guidé dans un corps de soupape (4) comprenant le siège de soupape (5) et entre l'entrée haute pression (2) et la sortie basse pression (3) et entre l'entrée haute pression (2) et un environnement du réducteur de pression (1), une bague d'étanchéité (13, 14) est à chaque fois disposée entre le piston de soupape (6) et le corps de soupape (4).

9. Réducteur de pression (1) selon la revendication 8, **caractérisé en ce que** les bagues d'étanchéité (13, 14) viennent en contact avec le piston de soupape (6) au niveau d'un seul et même composant du piston de soupape (6).

10. Réducteur de pression (1) selon la revendication 8 ou 9, **caractérisé en ce que** les bagues d'étanchéité (13, 14) viennent en contact avec le corps de soupape (4) au niveau d'un seul et même composant du corps de soupape (4).

11. Réducteur de pression (1) selon l'une quelconque des revendications 1 à 10, **caractérisé en ce que** la section transversale d'ouverture maximale de la soupape est inférieure aux autres sections transversales d'écoulement entre l'entrée haute pression (2) et la sortie basse pression (3).

12. Réducteur de pression (1) selon la revendication 11, **caractérisé en ce que** la section transversale d'ouverture maximale de la soupape est au maximum deux fois plus petite que les autres sections transversales d'écoulement entre l'entrée haute pression (2) et la sortie basse pression (3).
